# EUROPEAN PATENT SPECIFICATION

(11) **EP 4 421 354 B1**
(45) Date of publication and mention of the grant of the patent: **29.10.2025**
(21) Application number: 24159070.2
(22) Date of filing: 22.02.2024
(51) Int. Cl.: F16H 57/029, B25J 19/00, F16H 57/04

(54) **OIL ABSORBER**
ÖLABSORBER
ABSORBEUR D'HUILE

(30) Priority: 24.02.2023 JP 2023027023
(43) Date of publication of application: 28.08.2024
(73) Proprietor: Seiko Epson Corporation, Tokyo 160-8801 (JP)
(72) Inventor: NAKAMURA, Tomoaki, Suwa-shi, 392-8502 (JP); KIN, Hidenori, Suwa-shi, 392-8502 (JP); FUJITA, Tetsuji, Suwa-shi, 392-8502 (JP)
(74) Representative: Lewis Silkin LLP

(56) References cited:
- EP-A1- 3 889 346
- WO-A1-2022/131145
- JP-A- 2011 148 076
- US-A1- 2020 299 879

## Description

### BACKGROUND

### 1. Technical Field

The present invention relates to an oil absorber.

### 2. Related Art

A robot disclosed in JP-A-2011-148077 includes a base, a first arm rotatably coupled to the base, a second arm rotatably coupled to the first arm, a third arm rotatably coupled to the second arm, a first driving unit configured to drive and rotate the first arm, and a second driving unit configured to drive and rotate the second arm.

Each of the first driving unit and the second driving unit includes a motor and a speed reducer. The inside of the speed reducer is smeared with grease so as to realize smooth mesh rotation of gears provided in the speed reducer. Due to drive operation of each driving unit, there is a possibility that an oil component of the grease might leaks to the outside of the driving unit; therefore, an oil absorber(s) is provided around each driving unit. The oil absorber is made of a porous body such as a sponge.

However, the oil absorber according to related art disclosed in JP-A-2011-148077 has insufficient oil-component absorbing characteristics. More particularly, in the oil absorber according to related art, it is difficult for oil to spread from the portion where a drop of the oil has landed, and, moreover, due to weak power of retaining an oil component absorbed by the oil absorber, there is a risk of leakage to the outside from the oil absorber

JP 2011-148076 discloses a joint structure in which grease is contained in a circular recess of a first frame. A first cylindrical wall is provided integrally to the outer periphery of the circular recess of the first frame, and an annular first felt member is attached to the inner peripheral side of the first cylindrical wall over the entire circumference.

US 2020/299879 discloses a web structural body includes cellulose fibers and a binding material binding the cellulose fibers, and in the web structural body described above, a molten rate of the binding material at a surface of the web structural body is higher than a molten rate of the binding material at a center in a thickness direction of the web structural body.

### SUMMARY

According to the present invention, there is provided an oil absorber as defined in appended claim 1. According to a further aspect of the present invention, there is provided a robot set out in appended claim 9. Preferred features are set out in the dependent claims.

### BRIEF DESCRIPTION OF THE DRAWINGS

FIG. 1 is a cross-sectional view schematically illustrating an oil absorber according to the present invention.
FIG. 2 is an enlarged schematic view of fibers and a binding material that are included in the oil absorber illustrated in FIG. 1.
FIG. 3 is an enlarged view of the fiber and the binding material that are illustrated in FIG. 2.
FIG. 4 is a partial cross-sectional side view illustrating a state in which the oil absorber illustrated in FIG. 1 is disposed inside a robot.

### DESCRIPTION OF EMBODIMENTS

Based on some non-limiting preferred embodiments illustrated in the accompanying drawings, an oil absorber according to the present invention will now be explained in detail.

### Embodiments

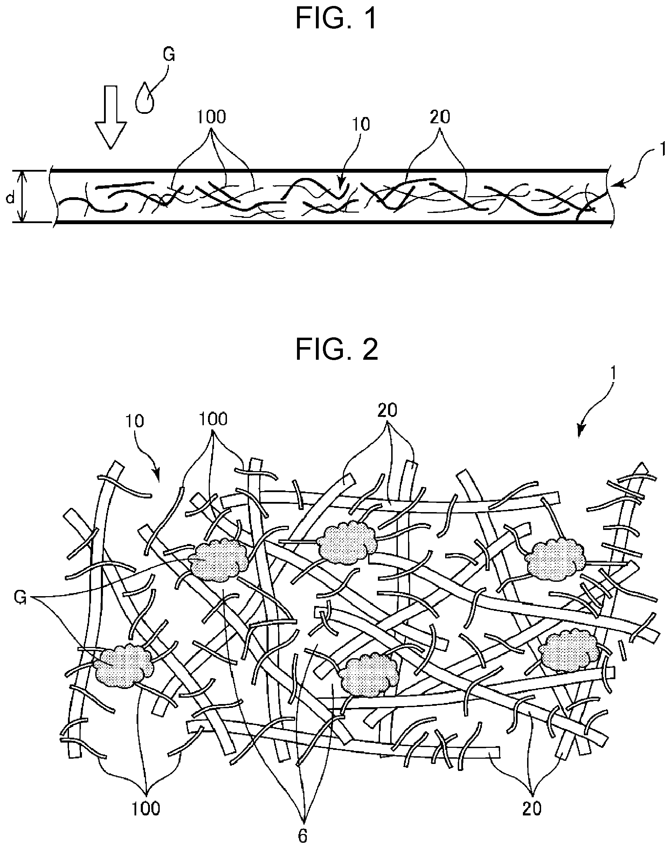

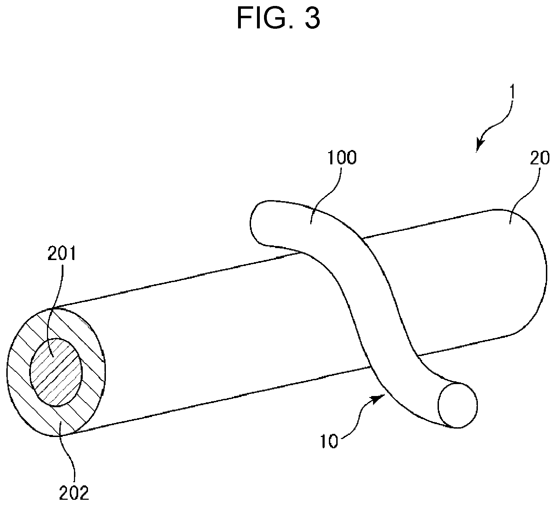

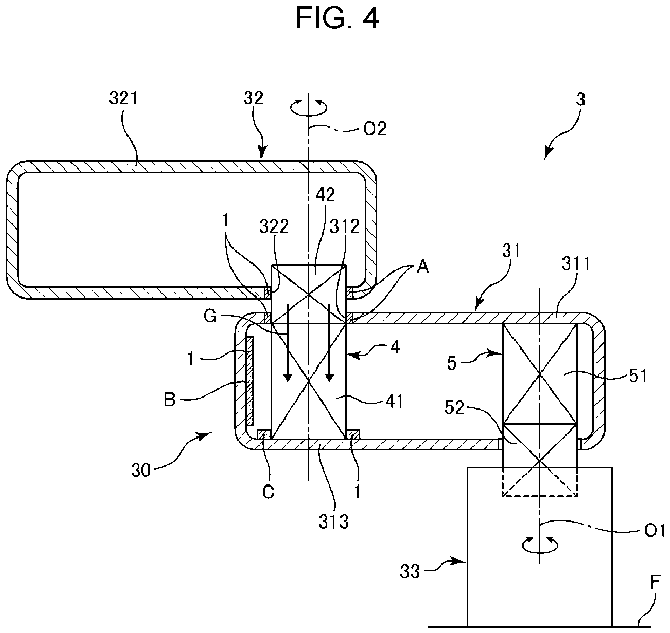

FIG. 1 is a cross-sectional view schematically illustrating an oil absorber according to the present invention. FIG. 2 is an enlarged schematic view of fibers and a binding material that are included in the oil absorber illustrated in FIG. 1. FIG. 3 is an enlarged view of the fiber and the binding material that are illustrated in FIG. 2. FIG. 4 is a partial cross-sectional side view illustrating a state in which the oil absorber illustrated in FIG. 1 is disposed inside a robot.

In the description below, for convenience of explanation, the upper side of FIGS. 1 and 4 may be referred to as "top" or "upper/over/above" or the like, the lower side may be referred to as "bottom" or "lower/under/below" or the like, the left side may be referred to as "distal end side" or the like, and the right side may be referred to as "base end side" or the like.

As illustrated in FIG. 4, an oil absorber(s) 1 illustrated in FIG. 1 is provided around a rotational driving unit 4 of a robot 3, that is, provided relatively near the rotational driving unit 4 at an upper position, a lower position, a lateral position, an outer peripheral position, etc., with respect to the rotational driving unit 4.

As illustrated in FIG. 2, the oil absorber 1 includes a defibrated material 10, which is obtained by defibrating fibers 100, and a binding material 20, which binds the fibers 100 together. The defibrated material 10 is a collective concept of the fibers 100, has a countless number of micro gaps 6 or pores between the fibers 100, and is capable of absorbing and retaining an oil component G at the gaps 6. This makes it possible to quickly and efficiently absorb and retain the oil component G derived from grease (described later), for example, and having leaked to the surroundings of the rotational driving unit 4 of the robot 3.

The rotational driving unit 4 of the robot 3 is smeared with grease (lubricating oil) for the purpose of, for example, smooth rotation of gears meshing with each other and smooth rotation of a shaft. The grease mainly contains the oil component G, and contains, as other components, for example, an additive such as a thickening agent and the like. The oil absorber 1 is capable of absorbing liquid containing the oil component G and other components. In the description below, however, the liquid that is to be absorbed by the oil absorber 1 is assumed to be the oil component G.

First, the defibrated material 10 will now be described.

As illustrated in FIG. 2, the defibrated material 10 is made up of a plurality of fibers 100. The defibrated material 10 has a function of, for example, performing quick absorption when a drop, a droplet, a mist, or the like of the oil component G derived from grease comes into contact with itself, and a function of spreading the droplet, etc. to a wide area inside itself. Furthermore, the defibrated material 10 has a function of retaining the oil component G which it has absorbed and spread, that is, which it has caught, and is capable of preventing the caught oil component G from leaking to the outside or suppressing such leakage. In particular, even when any of various kinds of stress, inertia, vibration, shock, or the like is applied to the rotational driving unit 4 or to the surroundings thereof due to operation of the robot 3, the oil absorber 1 fulfills its function of retaining the oil component G excellently.

The reason why the oil absorber 1 excels in retaining the oil component G is that, presumably, it retains the absorbed oil component G in a state of being spread in a wide area.

Examples of the shape of the defibrated material 10 include a bundle of the fibers 100 formed like a line or a belt, an agglomerate of the fibers 100 intertwined with one another, a so-called "lump", and the like.

Examples of the fibers 100 include: wood cellulose fibers whose raw material is softwood or hardwood; seed hair cellulose fibers such as cotton, linter, or kapok; bast cellulose fibers such as hemp, ramie, or paper mulberry; leaf/stem cellulose fibers such as banana or Manila hemp, and the like. Any one of those enumerated here may be used alone, or two or more of them may be used in combination. Among them, however, fibers containing wood cellulose mainly are preferable. Wood cellulose fibers are easily available in the form of pulp. Examples of the pulp include virgin pulp, Kraft pulp, chemi-thermo mechanical pulp, synthetic pulp, pulp derived from waste paper or recycled paper, and the like. Any one of those enumerated here may be used alone, or two or more of them may be used in combination. The cellulose fibers may be any fibers as long as they contain cellulose as a chemical compound, that is, cellulose in a narrow sense, as a chief constituent and are fibrous; applicable examples include fibers containing regenerated cellulose such as rayon or cupra, fibers containing hemicellulose, and fibers containing lignin.

It is preferable if the fibers 100 are cellulose fibers derived from waste paper or recycled paper. This is advantageous from the viewpoint of waste reduction, effective use of resources, environmental protection, and the like.

Waste paper is used paper, with ink, etc. on it. Recycled paper is paper recycled from waste paper or virgin paper. This recycling is performed using, for example, a sheet manufacturing apparatus such as one disclosed in JP-A-2022-176652.

An example of a method for defibrating the raw material is to use a defibrating apparatus configured as an impeller mill that includes a rotor that rotates at a high speed and a liner that is located at the outer circumference of the rotor. For example, the defibration is performed using a defibrating apparatus such as one disclosed in JP-A-2022-176652.

It is preferable if an average length of the fibers 100, though not specifically limited, is 0.1 mm or greater and 5 mm or less, or more preferably, 0.2 mm or greater and 3 mm or less. Satisfying this numerical condition makes it possible to quickly absorb the oil component G having come into contact with the oil absorber 1 due to droplet dripping or the like and to perform spreading in a wide area, and, in addition, makes it possible to sufficiently retain the oil component G having spread inside the oil absorber 1 and thus prevent or suppress leakage to the outside effectively.

It is preferable if an average diameter (average width) of the fibers 100, though not specifically limited, is 0.5 µm or greater and 200 µm or less, or more preferably, 1.0 µm or greater and 100 µm or less. Satisfying this numerical condition makes it possible to quickly absorb the oil component G having dripped and to perform spreading in a wide area, and, in addition, makes it possible to retain the oil component G having spread and thus prevent or suppress leakage to the outside effectively.

As described above, it is preferable if the average length of the fibers 100 is 0.1 mm or greater and 5 mm or less, and it is preferable if the average diameter of the fibers 100 is 0.5 µm or greater and 200 µm or less. Satisfying these numerical conditions make it possible to quickly absorb the oil component G having come into contact with the oil absorber 1 and to perform spreading in a wide area, and, in addition, make it possible to sufficiently retain the oil component G having spread inside the oil absorber 1 and thus prevent or suppress leakage to the outside effectively.

It is preferable if an average aspect ratio (i.e., a ratio of the average length to the average width) of the fibers 100, though not specifically limited, is 10 or greater and 1000 or less, or more preferably, 15 or greater and 500 or less, from a viewpoint similar to the fiber length described above.

It is preferable if the percentage content of the fibers 100 in the oil absorber 1, though not specifically limited, is 0.5% by weight or greater and 80% by weight or less, or more preferably, 1.0% by weight or greater and 70% by weight or less, or still more preferably, 3.0% by weight or greater and 67% by weight or less. Satisfying this numerical condition makes it possible to produce the above-described effect obtained by including the fibers 100 more remarkably.

Next, the binding material 20 will now be described.

The binding material 20 functions as a binder configured to bind the fibers 100 of the defibrated material 10 together.

The binding material 20 is not specifically limited as long as it fulfills the function described above. For example, a thermoplastic resin, a curable resin, or the like can be used. It is preferable if a thermoplastic resin is used. Examples of the thermoplastic resin include an AS resin, an ABS resin, polyethylene, polypropylene, polyolefin such as an ethylene-vinyl acetate copolymer (EVA), modified polyolefin, an acrylic resin such as polymethyl methacrylate, polyvinyl chloride, polystyrene, polyester such as polyethylene terephthalate and polybutylene terephthalate, polyamide (nylon^{®}) such as nylon 6, nylon 46, nylon 66, nylon 610, nylon 612, nylon 11, nylon 12, nylon 6-12, and nylon 6-66, polyphenylene ether, polyacetal, polyether, polyphenylene oxide, polyetheretherketone, polycarbonate, polyphenylene sulfide, thermoplastic polyimide, polyetherimide, a liquid crystal polymer such as aromatic polyester, a water-soluble polymer such as PVA and PAP, various thermoplastic elastomers such as a styrene-based thermoplastic elastomer, a polyolefin-based thermoplastic elastomer, a polyvinyl chloride-based thermoplastic elastomer, a polyurethane-based thermoplastic elastomer, a polyester-based thermoplastic elastomer, a polyamide-based thermoplastic elastomer, a polybutadiene-based thermoplastic elastomer, a trans polyisoprene-based thermoplastic elastomer, a fluoro-rubber-based thermoplastic elastomer, and a chlorinated polyethylene-based thermoplastic elastomer, and the like. Any one selected from among those enumerated here, or a combination of two or more, may be used. Preferably, for example, polyester or a composition containing polyester can be used as the thermoplastic resin.

Examples of the curable resin include a thermosetting resin, a photo-curable resin, and an ultraviolet (UV) curable resin, and the like. Specifically, an epoxy resin, a phenol resin, polyurethane, or the like can be used.

Since the binding material 20 is a thermoplastic resin as described above, it is possible to fulfil a function as a binder configured to bind the fibers 100 of the defibrated material 10 together more remarkably, and it is possible to make a material selection easier. Another advantage is that the binding material 20 containing a thermoplastic resin is unlikely to inhibit the function of absorbing and retaining the oil component G of the defibrated material 10 described above.

The binding material 20 may be any resin material other than a thermoplastic resin, or any material other than a resin, for example, a naturally derived material such as starch, protein-based adhesive, wood-component-based adhesive, PLA (polylactic acid), or the like. Alternatively, a thermoplastic resin and any other kind of material may be mixed at a predetermined ratio, for example, at a weight ratio of 1: 9 to 9: 1.

As illustrated in FIGS. 1 to 3, the binding material 20 is included as fibrous constituents in the oil absorber 1. This enables entanglement with the fibers 100 and increases places of binding the fibers 100 together. Therefore, it is possible to bind the fibers 100 together well, that is, in a non-excessive non-deficient manner, possible to ensure sufficient rigidity of the oil absorber 1, and possible to form the oil absorber 1 into a desired shape well.

As illustrated in FIG. 3, the binding material 20 has a dual-layer structure that includes a core 201 and a cover layer 202 by which an outer circumferential portion of the core 201 is covered.

Either a thermoplastic resin or a curable resin may be used as a material of each of the core 201 and the cover layer 202; however, mainly, it is preferable if a thermoplastic resin is used.

Among others, it is preferable if the core 201 is made of polyethylene terephthalate. This makes it possible to increase the rigidity, so-called stiffness, of the binding material 20. Consequently, it is possible to increase the rigidity of the oil absorber 1 sufficiently.

It is preferable if the cover layer 202 is made of at least one kind selected from the group consisting of polyolefin and polyamide. This ensures better binding to the fibers 100 of the defibrated material 10. That is, the cover layer 202 made of this material excels in functioning as a binder.

Though thermal characteristics of the core 201 and the cover layer 202 are not specifically limited, it is preferable if a softening point of the core 201 is higher than a softening point of the cover layer 202. In this case, it is preferable if there is a difference of 10°C or greater between the softening point of the core 201 and that of the cover layer 202, or more preferably, a difference of 20°C or greater.

As described above, the binding material 20 includes the core 201, which is fibrous, and the cover layer 202, by which the outer circumferential portion of the core 201 is covered. This makes it possible to achieve both ensuring sufficient rigidity of the binding material 20 and enhancing the binder function of the binding material 20.

Moreover, if the binding material 20 is fibrous, it follows that the oil absorber 1 as a whole is fibrous in addition to the defibrated material 10, and it thus follows that the gaps 6 having desired size are formed sufficiently and uniformly. Consequently, it is possible to produce the effect described above sufficiently, that is, an effect of making it possible to quickly absorb the oil component G having come into contact with the oil absorber 1 and to perform spreading in a wide area, and, in addition, making it possible to sufficiently retain the oil component G having spread inside the oil absorber 1 and thus prevent or suppress leakage to the outside.

The border between the core 201 and the cover layer 202 may be ambiguous. For example, there may be a gradual decrease in terms of material composition and material softening point of the binding material 20 from the center side toward the outer circumference side; even in this case, the above-described effect can be obtained.

The binding material 20 may have a single-layer structure, that is, a fibrous structure the entirety of which is made of the same material.

Though not specifically limited, it is preferable if an average fiber length of the binding material 20 that is fibrous is greater than an average fiber length of the fibers 100 of the defibrated material 10. It is preferable if the average fiber length of the binding material 20 is 1.0 mm or greater and 20 mm or less, or more preferably, 1.2 mm or greater and 10 mm or less. This makes it possible to perform better binding to the fibers 100 of the defibrated material 10 and ensure sufficient rigidity of the oil absorber 1.

It is preferable if an average fiber width (fiber diameter) of the binding material 20, though not specifically limited, is 10 µm or greater and 100 µm or less, or more preferably, 15 µm or greater and 50 µm or less. This makes it possible to perform better binding to the fibers 100 of the defibrated material 10 and ensure sufficient rigidity of the oil absorber 1.

The binding material 20, though may be added separately when manufacturing the oil absorber 1, may be included in the oil absorber 1 on the basis of the principle described below.

Used waste paper, etc., sometimes contains a resin component that was added in a papermaking process. The resin component remains contained in the defibrated material 10 obtained by defibrating the waste paper, etc. The resin component sometimes functions as the binding material 20. When such waste paper, etc. is used as a raw material to obtain the defibrated material 10 and the fibers 100 of the defibrated material 10 are used as the oil absorber 1, it follows that the binding material 20 originally clings to the fibers 100 or the binding material 20 is included in the defibrated material 10. When the oil absorber 1 is manufactured using the defibrated material 10 of this kind, it follows that the binding material 20 is already included in the oil absorber 1. As described here, a part or a whole of the binding material 20 included in the oil absorber 1 may be derived from the raw material of the defibrated material 10. It suffices to add the binding material 20 separately when an amount of the binding material 20 derived from the raw material of the defibrated material 10 is not enough.

It is preferable if the percentage content of the binding material 20 in the oil absorber 1, though not specifically limited, is 5% by weight or greater and 90% by weight or less, or more preferably, 10% by weight or greater and 80% by weight or less, in relation to the defibrated material 10. Satisfying this numerical condition makes it possible to fulfill the function of absorbing and retaining the oil component G and the function as a binder for binding the fibers 100 together sufficiently.

In the foregoing description, the binding material 20 is fibrous. However, the scope of the present disclosure is not limited to this example. The binding material 20 may have any shape other than a fibrous shape, for example, a particle shape, a scale shape, or the like.

When the binding material 20 that has a particle shape is used, its average particle diameter, though not specifically limited, may preferably be 5 µm or greater and 150 µm or less, or more preferably, 15 µm or greater and 100 µm or less. Satisfying this numerical condition makes it possible to obtain a better binder function.

When the binding material 20 that has a particle shape is used, it is preferable if the percentage content of the binding material 20, though not specifically limited, is 8% by weight or greater and 95% by weight or less, or more preferably, 15% by weight or greater and 85% by weight or less, in relation to the defibrated material 10. Satisfying this numerical condition makes it possible to fulfill the function of absorbing and retaining the oil component G and the function as a binder for binding the fibers 100 together sufficiently.

The oil absorber 1 may contain any component (other component) other than those described above.

Examples of such a component include various kinds of additive such as a surfactant, a lubricant, an anti-foaming agent, a filler, an anti-blocking agent, an ultraviolet absorbing agent, a colorant such as a pigment or a dye, a flame retarder, and a flow improver, and the like.

It is preferable if the percentage content of the above-described other component in the oil absorber 1, though not specifically limited, is 10% by weight or less, or more preferably, 5.0% by weight or less, in relation to a total weight of the defibrated material 10 and the binding material 20.

As illustrated in FIG. 1, the oil absorber 1 is formed in a sheet shape. This shape offers an excellent handleability and ensures a large area of a surface of contact with the oil component G. The oil absorber 1 having a shape like a sheet as described here may preferably have flexibility.

The handleability will now be described. For example, a single sheet of, or plural sheets of, the oil absorber 1 having a desired shape(s) can be obtained by performing cutting processing, punching processing, etc. on an oil absorber mother sheet as appropriate. That is, it is possible to manufacture a plurality of sheet-like oil absorbers 1 having the same shape or different shapes out of a single mother sheet. The sheet-like oil absorber 1 having been cut into a desired shape can be disposed at an appropriate position around the rotational driving unit 4 such as a disposing place A, B, C to be described later by means of bonding or the like, for example. Thanks also to the flexibility of the sheet-like oil absorber 1, it is possible to get the above disposing work done easily. As described here, the sheet-like oil absorber 1 offers an excellent handleability in manufacturing, processing, and disposing.

It is preferable if an average thickness d of the sheet-like oil absorber 1, though not specifically limited, is 1 mm or greater and 50 mm or less, or more preferably, 5 mm or greater and 20 mm or less. Satisfying this numerical condition makes it possible to absorb and retain the oil component G sufficiently and further enhance the handleability.

Though not illustrated, a plurality of through holes going in a thickness direction may be formed in the sheet-like oil absorber 1. A plurality of grooves, a plurality of slits, a plurality of small projections (embossed), or the like may be formed in/on one surface or both surfaces of the sheet-like oil absorber 1. For example, when one surface of the sheet-like oil absorber 1 includes a plurality of grooves or slits formed in parallel at predetermined intervals, it is easier to deform the sheet-like oil absorber 1 in a curved manner in a direction in which the grooves or the slits are arranged. As will be described later, this will help curved deformation of the oil absorber 1 when the oil absorber 1 is disposed in a curved manner along an inner circumferential surface of an insertion hole 312 and an inner circumferential surface of an insertion hole 322, when the oil absorber 1 is disposed in a wrapping manner around an outer circumferential surface of a motor 41 and an outer circumferential surface of a speed reducer 42, or the like, and, therefore, the handleability in disposing the oil absorber 1 improves.

Note that, in the present disclosure, the form, shape, etc. of the oil absorber 1 is not limited to a sheet shape. It may have any shape other than a sheet shape, for example, a bar shape, a block shape, a shape of a coarse-crushed piece obtained by coarse-crushing a sheet, or the like.

In the present disclosure, a specific gravity and a bulk density of the oil absorber 1 is not specifically limited; however, it is preferable if the bulk density of the oil absorber 1 is 0.01 g/cm² or greater and 2.0 g/cm² or less, or more preferably, 0.1 g/cm² or greater and 1.0 g/cm² or less. Satisfying this numerical condition makes it possible to absorb and retain the oil component G sufficiently even when an amount of the oil component G that needs to be absorbed in relation to a volume of the oil absorber 1 (a ratio thereof) is relatively large, and thus possible to prevent the oil component G from leaking to the outside from the oil absorber 1 or suppress such leakage.

The oil absorber 1 described above is, for example, provided around the rotational driving unit 4 of the robot 3 such as one illustrated in FIG. 4. A structure of the robot 3 will now be described. The robot 3 illustrated in FIG. 4 is a SCARA robot. However, the present disclosure may be applied to any robot other than a SCARA robot, for example, a six-axis multi-jointed robot or a dual-arm robot.

As illustrated in FIG. 4, the robot 3 includes a base pedestal 33, a first arm 31, a second arm 32, a rotational driving unit 5 configured to drive and rotate the first arm 31 with respect to the base pedestal 33 on a rotation axis O1, and a rotational driving unit 4 configured to drive and rotate the second arm 32 with respect to the first arm 31 on a rotation axis O2. The first arm 31, the second arm 32, and the rotational driving unit 4 make up a robot arm 30.

The base pedestal 33 is disposed under the base end side of the first arm 31. The base pedestal 33 is provided on, and is fixed to, a floor F. The first arm 31 is coupled rotatably to the base pedestal 33 and is driven to rotate on the rotation axis O1 due to operation of the rotational driving unit 5. The second arm 32 is disposed over the distal end side of the first arm 31. The second arm 32 is coupled rotatably to the first arm 31 and is driven to rotate on the rotation axis O2 due to operation of the rotational driving unit 4. Each of the rotation axis O1 and the rotation axis O2 is an axis extending in the vertical direction.

The rotational driving unit 4 includes a motor 41 and a speed reducer 42. The rotational driving unit 5 includes a motor 51 and a speed reducer 52. The rotational driving unit 4 and the rotational driving unit 5 are disposed such that their orientations are the opposite of each other in the vertical direction; however, since they have substantially the same structure, the rotational driving unit 4 will be described below as a representative example.

The first arm 31 includes a housing 311. The housing 311 has an insertion hole 312 through which the rotational driving unit 4 is inserted. The second arm 32 includes a housing 321. The housing 321 has an insertion hole 322 through which the rotational driving unit 4 is inserted. In the illustrated structure, the insertion holes 312 and 322 are circular.

The rotational driving unit 4 has a cylindrical shape and is inserted through the insertion holes 312 and 322 together. One end portion of the rotational driving unit 4, specifically, its upper end portion, is located inside the housing 321 of the second arm 32 and is fixed to the housing 321 by means of a non-illustrated fixing member. The other end portion of the rotational driving unit 4, specifically, its lower end portion, is located inside the housing 311 of the first arm 31 and is fixed to the housing 311 by means of a non-illustrated fixing member.

The rotational driving unit 4 includes the motor 41 and the speed reducer 42 coupled to one end portion of the motor 41, specifically, its upper end portion. The motor 41 and the speed reducer 42 are disposed in this order from below, and they are interconnected.

The motor 41 includes a non-illustrated output shaft. An input shaft of the speed reducer 42 is coupled to the output shaft of the motor 41. Therefore, when the output shaft of the motor 41 rotates, the input shaft of the speed reducer 42 rotates. A rotation speed of the output shaft of the motor 41 is reduced by a non-illustrated reduction mechanism provided inside the speed reducer 42, and a non-illustrated output shaft of the speed reducer 42 rotates at a rotation speed having been reduced at a predetermined reduction ratio.

The motor 41 is fixed to a bottom portion 313 inside the housing 311 of the first arm 31 by means of a non-illustrated fixing member. The output shaft of the speed reducer 42 is fixed to a rim portion of the insertion hole 322 inside the housing 321 of the second arm 32 by means of a non-illustrated fixing member.

Because of the structure described above, the second arm 32 is able to rotate on the rotation axis O2 with respect to the first arm 31 when the motor 41 rotates.

Examples of the speed reducer 42 include an eccentric-rocking-type speed reducer, a planet-gear-type speed reducer, a strain-wave-gearing-type speed reducer, and the like.

The speed reducer 42 described above is smeared with grease that contains the oil component G, for example, between its gears. When the rotational driving unit 4 operates, the temperature of the rotational driving unit 4 as a whole rises to cause a decrease in the viscosity of the grease, and it could happen that the oil component G leaks to the outside of the speed reducer 42. For the purpose of absorbing the oil component G having leaked out, the oil absorber 1 is provided at, for example, the following disposing place A, B, C illustrated in FIG. 4.

### 1. Disposing Place A

The oil absorber 1 is provided at an outer circumferential portion of the speed reducer 42, that is, each of an inner circumferential portion of the insertion hole 312 and an inner circumferential portion of the insertion hole 322. At the disposing place A, the oil absorber 1 having a shape like a belt is disposed after being deformed into a ring shape such that its one principal surface is in contact with an inner circumferential surface of the insertion hole 312, and, in addition, the oil absorber 1 having a shape like a belt is disposed after being deformed into a ring shape such that its one principal surface is in contact with an inner circumferential surface of the insertion hole 322. In this case, the oil absorber 1 may be bonded to the inner circumferential surface of the insertion hole 312 and the inner circumferential surface of the insertion hole 322, or to the outer circumferential surface of the speed reducer 42, using an adhesive agent, an adhesive tape, or the like, or may be fitted in, or press-fitted in, the gap around the speed reducer 42.

Unlike the illustrated structure, the sheet-like oil absorber 1 may be disposed by being wrapped around a part or the whole of an outer circumferential surface of a portion protruding upward from the insertion hole 322 of the speed reducer 42. The sheet-like oil absorber 1 may be disposed by being wrapped around a part or the whole of an outer circumferential surface of a portion protruding downward from the insertion hole 312 of the speed reducer 42.

Disposing the oil absorber 1 at the disposing place A described above makes it possible to directly absorb and retain the oil component G leaking out from the speed reducer 42 and then running down the outer circumferential surface of the speed reducer 42.

### 2. Disposing Place B

The oil absorber 1 is disposed around the motor 41, specifically, of the inner surface of the housing 311 of the first arm 31, a portion facing the outer circumferential portion of the motor 41. In the structure illustrated in FIG. 4, the oil absorber 1 is disposed on, of the inner surface of the housing 311, a distal-end-side lateral surface (distal end surface) ahead of the motor 41. In this example, the oil absorber 1 is disposed apart from the outer circumferential surface of the motor 41 by a predetermined distance. However, in the present disclosure, disposing the oil absorber 1 in contact with the outer circumferential surface of the motor 41 is not precluded.

The oil absorber 1 may be disposed at the far side in FIG. 4 or at the near side in FIG. 4 of the inner surface of the housing 311. When the oil absorber 1 is disposed at each of the distal end side, the far side, and the near side in FIG. 4 of the inner surface of the housing 311, it is possible to surround the motor 41 at three sides by the oil absorbers 1.

Unlike the illustrated structure, the sheet-like oil absorber 1 may be disposed by being wrapped around a part or the whole of an outer circumferential surface of the motor 41.

Disposing the oil absorber 1 at the disposing place B described above makes it possible to absorb and retain the oil component G spattering from the motor 41.

### 3. Disposing Place C

The oil absorber 1 is provided at the other end portion of the motor 41, that is, the lower end portion of the motor 41. In the structure illustrated in FIG. 4, since the lower end of the motor 41 is in contact with the inner surface (upper surface) of the bottom portion 313 of the housing 311, the oil absorber 1 is disposed on the inner surface (upper surface) of the bottom portion 313 and on the outer circumferential portion of the motor 41. At the disposing place C, the oil absorber 1 has a shape of a punched sheet whose portion corresponding to the motor 41 is punched away so as to correspond to the shape of the lower end portion of the motor 41. In other words, the sheet-like oil absorber 1 has, for example, a circular punch hole at its center, and the lower end portion of the motor 41 is inserted or fitted in this hole.

Disposing the oil absorber 1 at the disposing place C described above makes it possible to absorb and retain the oil component G leaking out from the motor 41 or the speed reducer 42 and then running down the outer circumferential surface of the motor 41 or the speed reducer 42 at the lower end portion of the motor 41.

Unlike the illustrated structure, the sheet-like oil absorber 1 may be inserted between the lower end of the motor 41 and the inner surface (upper surface) of the bottom portion 313. In this case, it is preferable if the oil absorber 1 has a shape that includes the lower end surface of the motor 41, that is, a shape protruding outward beyond an outer peripheral edge of the lower end of the motor 41.

Disposing the oil absorber 1 at the disposing place A, B, C described above makes it possible to absorb and retain the oil component G effectively. Disposing the oil absorber 1 at least at one of the disposing place A, the disposing place B, and the disposing place C suffices. Even in this case, it is possible to produce the effect described above sufficiently.

The oil absorber 1 can be disposed also around the rotational driving unit 5, similarly to the rotational driving unit 4 described above. In this case, it is possible to dispose the oil absorber 1 at least at one of the disposing place A, the disposing place B, and the disposing place C, preferably, at all of them.

The oil absorber 1 may be disposed at any portion of the robot 3 other than the disposing place A, B, C described above.

As described above, the oil absorber 1 is disposed around the rotational driving unit 4 or 5 of the robot 3 and absorbs the oil component G. The oil absorber 1 includes the defibrated material 10, which is obtained by defibrating the fibers 100, and the binding material 20, which binds the fibers 100 together. By this means, the oil absorber 1 is capable of quickly absorbing the oil component G having leaked out from the rotational driving unit 4 or 5, perform spreading in a wide area inside the oil absorber 1, and retaining the oil component G having spread. Consequently, it is possible to prevent the oil component G from leaking to the outside or suppress such leakage.

The rotational driving unit 4 includes the motor 41 and the speed reducer 42 coupled to one end portion of the motor 41. The oil absorber 1 is disposed at least at one of the outer circumferential portion of the speed reducer 42, surroundings around the motor 41, and the other end portion of the motor 41. This makes it possible to efficiently absorb and retain the oil component G having leaked out from the rotational driving unit 4.

Though an oil absorber according to the present disclosure has been described above through description about the illustrated embodiment, the scope of the present disclosure is not limited to this example. Each of components constituting the oil absorber may be replaced with any alternative that fulfills the same function. A layer having any desired function may be additionally included in the oil absorber. For example, the oil absorber may include a flame-retardant layer having high flame resistance, an adhesive layer that includes an adhesive agent or a gluing agent, and/or the like.

## Claims

1. An oil absorber (1) configured to be disposed around a rotational driving unit (4) of a robot (3) and configured to absorb an oil component (G), and **characterized by** comprising:
a defibrated material (10) obtained by defibrating fibers (100); and
a binding material (20) that binds the fibers together,
wherein the binding material (20) includes a core (201) that is fibrous and a cover layer (202) by which an outer circumferential portion of the core is covered.

2. The oil absorber according to claim 1 formed in a sheet shape.

3. The oil absorber according to claim 2 having a bulk density of 0.01 g/cm² or greater and 2.0 g/cm² or less.

4. The oil absorber according to claim 1, wherein
the fibers (100) are cellulose fibers derived from waste paper or recycled paper.

5. The oil absorber according to claim 1, wherein
an average length of the fibers (100) is 0.1 mm or greater and 5 mm or less, and
an average diameter of the fibers (100) is 0.5 µm or greater and 200 µm or less.

6. The oil absorber according to claim 1, wherein
the binding material (20) is a thermoplastic resin.

7. The oil absorber according to claim 1, wherein
percentage content of the binding material (20) is 5% by weight or greater and 90% by weight or less in relation to the defibrated material (10).

8. The oil absorber according to claim 1, wherein
the rotational driving unit (4) includes a motor (41) and a speed reducer (42) coupled to one end portion of the motor, and
the oil absorber is disposed at least at one of an outer circumferential portion of the speed reducer, surroundings around the motor, and another end portion of the motor.

9. A robot (3) comprising:
a base pedestal (33);
a first arm (31) comprising a first housing (311);
a second arm (32) comprising a second housing (321);
a first rotational driving unit (5) configured to drive and rotate the first arm (31) with respect to the base pedestal (33) on a first rotation axis (O1);
a second rotational driving unit (4) configured to drive and rotate the second arm (32) with respect to the first arm (31) on a second rotation axis (O2); and
an oil absorber (1) according to any one of the preceding claims, wherein
the second rotational driving unit (4) includes a motor (41) and a speed reducer (42) coupled to one end portion of the motor, and
the oil absorber is disposed on an inner surface of the first housing on an opposite side of the motor (41) to the first rotation axis (O1).

## Patentansprüche

1. Ölabsorber (1), der eingerichtet ist, um eine Rotationsantriebseinheit (4) eines Roboters (3) herum angeordnet zu werden, und eingerichtet ist, eine Ölkomponente (G) zu absorbieren, und **dadurch gekennzeichnet, dass** er umfasst:
ein zerfasertes Material (10), das durch Zerfasern von Fasern (100) erhalten wird; und
ein Bindematerial (20), das die Fasern aneinander bindet,
wobei das Bindematerial (20) einen Kern (201), der faserig ist, und eine Abdeckschicht (202), mit der ein äußerer Umfangsabschnitt des Kerns bedeckt ist, enthält.

2. Ölabsorber nach Anspruch 1, der in einer Blattform gebildet ist.

3. Ölabsorber nach Anspruch 2 mit einer Massendichte von 0,01 g/cm² oder mehr und 2,0 g/cm² oder weniger.

4. Ölabsorber nach Anspruch 1, wobei
die Fasern (100) Cellulosefasern sind, die aus Altpapier oder Recyclingpapier gewonnen werden.

5. Ölabsorber nach Anspruch 1, wobei
eine durchschnittliche Länge der Fasern (100) 0,1 mm oder mehr und 5 mm oder weniger ist und
ein durchschnittlicher Durchmesser der Fasern (100) 0,5 µm oder mehr und 200 µm oder weniger ist.

6. Ölabsorber nach Anspruch 1, wobei
das Bindematerial (20) ein thermoplastisches Harz ist.

7. Ölabsorber nach Anspruch 1, wobei
ein Gehalt des Bindematerials (20) in Prozent 5 Gewichtsprozent oder mehr und 90 Gewichtsprozent oder weniger in Bezug auf das zerfaserte Material (10) ist.

8. Ölabsorber nach Anspruch 1, wobei
die Rotationsantriebseinheit (4) einen Motor (41) und ein Untersetzungsgetriebe (42) enthält, das an einen Endabschnitt des Motors gekoppelt ist, und
der Ölabsorber mindestens an/in einem von einem äußeren Umfangsabschnitt der Untersetzungsgetriebe, einer Umgebung um den Motor und einem anderen Endabschnitt des Motors angeordnet ist.

9. Roboter (3), umfassend:
einen Basissockel (33);
einen ersten Arm (31), der ein erstes Gehäuse (311) umfasst;
einen zweiten Arm (32), der ein zweites Gehäuse (321) umfasst;
eine erste Rotationsantriebseinheit (5), die eingerichtet ist, den ersten Arm (31) anzutreiben und in Bezug auf den Basissockel (33) auf einer ersten Drehachse (O1) zu drehen;
eine zweite Rotationsantriebseinheit (4), die eingerichtet ist, den zweiten Arm (32) anzutreiben und in Bezug auf den ersten Arm (31) auf einer zweiten Drehachse (O2) zu drehen; und
einen Ölabsorber (1) nach einem der vorstehenden Ansprüche, wobei
die zweite Rotationsantriebseinheit (4) einen Motor (41) und ein Untersetzungsgetriebe (42), das an einen Endabschnitt des Motors gekoppelt ist, enthält und
der Ölabsorber an einer Innenfläche des ersten Gehäuses an einer Seite des Motors (41) gegenüberliegend zu der ersten Drehachse (O1) angeordnet ist.

## Revendications

1. Absorbeur d'huile (1) configuré pour être disposé autour d'une unité d'entraînement rotative (4) d'un robot (3) et configuré pour absorber un composant d'huile (G), et **caractérisé en ce qu'**il comprend :
un matériau défibré (10) obtenu par défibrage de fibres (100) ; et
un matériau de liaison (20) liant les fibres entre elles,
dans lequel le matériau de liaison (20) inclut un noyau (201) fibreux et une couche de couverture (202) recouvrant une partie circonférentielle extérieure du noyau.

2. Absorbeur d'huile selon la revendication 1 conçu sous forme de feuille.

3. Absorbeur d'huile selon la revendication 2 présentant une densité apparente de 0,01 g/cm² ou plus et de 2,0 g/cm² ou moins.

4. Absorbeur d'huile selon la revendication 1, dans lequel
les fibres (100) sont des fibres de cellulose dérivées de papier usagé ou de papier recyclé.

5. Absorbeur d'huile selon la revendication 1, dans lequel
une longueur moyenne des fibres (100) est de 0,1 mm ou plus et de 5 mm ou moins, et
un diamètre moyen des fibres (100) est de 0,5 µm ou plus et de 200 µm ou moins.

6. Absorbeur d'huile selon la revendication 1, dans lequel
le matériau de liaison (20) est une résine thermoplastique.

7. Absorbeur d'huile selon la revendication 1, dans lequel
une teneur en pourcentage du matériau de liaison (20) est de 5 % en poids ou plus et de 90 % en poids ou moins par rapport au matériau défibré (10).

8. Absorbeur d'huile selon la revendication 1, dans lequel
l'unité d'entraînement rotative (4) inclut un moteur (41) et un réducteur de vitesse (42) accouplé à une partie d'extrémité du moteur, et
l'absorbeur d'huile est disposé au moins au niveau de l'un parmi une partie circonférentielle extérieure du réducteur de vitesse, un environnement autour du moteur, et une autre partie d'extrémité du moteur.

9. Robot (3) comprenant :
un socle de base (33) ;
un premier bras (31) comprenant un premier boîtier (311) ;
un deuxième bras (32) comprenant un deuxième boîtier (321) ;
une première unité d'entraînement rotative (5) configurée pour entraîner et faire tourner le premier bras (31) par rapport au socle de base (33) sur un premier axe de rotation (O1) ;
une deuxième unité d'entraînement rotative (4) configurée pour entraîner et faire tourner le deuxième bras (32) par rapport au premier bras (31) sur un deuxième axe de rotation (O2) ; et
un absorbeur d'huile (1) selon l'une quelconque des revendications précédentes, dans lequel
la deuxième unité d'entraînement rotative (4) inclut un moteur (41) et un réducteur de vitesse (42) accouplé à une partie d'extrémité du moteur, et
l'absorbeur d'huile est disposé sur une surface intérieure du premier boîtier sur un côté opposé du moteur (41) par rapport au premier axe de rotation (01) .
